# EUROPÄISCHE PATENTSCHRIFT

(11) **EP 1 361 946 B1**
(45) Veröffentlichungstag und Bekanntmachung des Hinweises auf die Patenterteilung: **26.07.2006**
(21) Anmeldenummer: 02719845.6
(22) Anmeldetag: 15.02.2002
(51) Int. Cl.: B29C 45/66

(54) **SCHLIESSEINRICHTUNG IN EINER SPRITZGIESSMASCHINE FÜR KUNSTSTOFFE**
CLOSING DEVICE IN AN INJECTION MOULDING MACHINE FOR SYNTHETIC MATERIALS
DISPOSITIF DE FERMETURE DANS UNE PRESSE A INJECTION DE MATIERE SYNTHETIQUE

(30) Priorität: 15.02.2001 DE 10107502; 28.06.2001 DE 10130669; 19.10.2001 DE 10152688
(43) Veröffentlichungstag der Anmeldung: 19.11.2003
(73) Patentinhaber: Mannesmann Plastics Machinery GmbH, 80997 München (DE)
(72) Erfinder: FISCHBACH, Gunther, 82256 Fürstenfeldbruck (DE)
(74) Vertreter: Wilhelm, Ludwig
(86) Internationale Anmeldenummer: PCT/EP2002/001616
(87) Internationale Veröffentlichungsnummer: WO 2002/064346

(56) Entgegenhaltungen:
- EP-A- 0 620 095
- WO-A-01/47685
- US-A- 5 804 224

## Beschreibung

Die Erfindung betrifft eine Schließeinrichtung gemäß dem Oberbegriff von Patentanspruch 1.

Aus der EP 0 658 136 B1 ist eine Schließeinheit für Formwerkzeuge von Spritzgießmaschinen bekannt, bei der zwischen der beweglichen Werkzeugaufspannplatte und einer Endplatte ein Kniehebelschließsystem zum Verschieben der beweglichen Werkzeugaufspannplatte vorgesehen ist. Mehrere sogenannte Fünfpunkt-Kniehebelsysteme sind mit einem gemeinsamen Kreuzkopf gekuppelt. An diesem Kreuzkopf greift drehfest eine Gewindespindel an, welche mit einer Mutter in Eingriff steht, die axial unverschiebbar, aber drehantreibbar in der Endplatte aufgenommen ist. Zum Zwecke des Drehantriebs ist die Mutter mit der Hohlwelle eines Elektromotors gekuppelt, welcher an die Außenseite der Endplatte angeflanscht ist. Die Innenabmessung der Hohlwelle ist dergestalt auszulegen, dass sie geeignet ist, die gesamte, nach hinten aus der Mutter ausfahrbare Länge der Gewindespindel problemlos aufzunehmen. Die Kniehebelsysteme sind symmetrisch zur, die Gewindespindel, die Spindelmutter und der Elektromotor mit seiner Hohlwelle sind fluchtend mit der Kraftachse der Schließeinheit. Ein ähnliches System ist in der DE-PS 195 24 314 C1 beschrieben.

Nachteilig an diesen Systeme ist, dass der außerhalb der Endplatte angeordnete Elektromotor und die an die Spindellänge angepasste Innenabmessung der Hohlwelle zu einer vergleichsweise lang bauenden Schließeinrichtung führen.

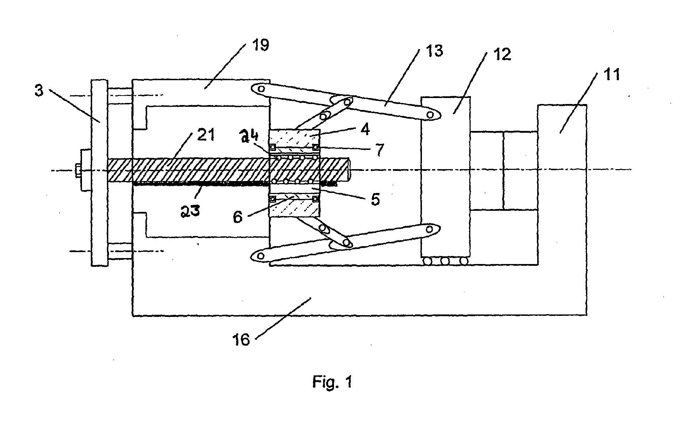

Aus der gattungsbildenen US 5,804,224 ist es bekannt (siehe Figur 1), den Hohlwellenmotor an dem Kreuzkopf der Kniehebelschließeinheit zu befestigen und mit dem Rotor eine Spindel anzutreiben, die im Eingriff mit einer an der Rückseite der Endplatte drehfest befestigten Spindelmutter steht. Beim Drehantrieb des Rotors wird die Spindel in Drehung versetzt und infolge des Eingriffs mit der feststehenden Spindelmutter wird die Einheit aus Spindel und Hohlwellenmotor axial nach hinten und vorne bewegt und somit der Kniehebelmechanismus betätigt. Auch diese Ausführungsform hat den Nachteil, dass die Schließeinrichtung einen relativ großen Platzbedarf hat, da bei offener Schließeinheit die Spindel weit auf der Rückseite der Endplatte hinausragt.

Der Erfindung liegt die Aufgabe zugrunde, eine gattungsgemäße Schließeinrichtung zu schaffen, die deutlich kürzer baut und zusätzlich eine kostengünstige Konstruktion erlaubt.

Die Erfindung löst diese Aufgabe durch die Merkmale des Anspruchs 1. Die nachfolgenden Ansprüche sind vorteilhafte Weiterbildungen der Erfindung.

Erfindungsgemäß ist die Spindel drehfest angeordnet und das der beweglichen Werkzeugaufspannplatte zugewandte Ende der Spindel ist mit dem Rotor, also der Hohlwelle, des Hohlwellenmotors in Eingriff, während der Stator des Hohlwellenmotors mit dem Kniehebelmechanismus verbunden ist. Die Spindel kann in der Endplatte oder einer dahinter angeordneten Ankerplatte befestigt sein. Letzteres erlaubt bei Verwendung einer Endplatte mit Durchbruch, dass der Hohlwellenmotor in die Endplatte eintauchen kann, was den Platzbedarf der Schließeinheit weiter reduziert. Ausserdem kann auf diese Weise die Endplatte im Hinblick auf ihre Dicke und ihre sonstige Form beliebig ausgelegt und den jeweiligen Anforderungen entsprechend ausgestaltet werden. Der Hohlwellenmotor ist entweder unmittelbar am Kreuzkopf angeflanscht oder in diesen integriert, beispielsweise dadurch, dass der Kreuzkopf eine Ausnehmung zur Aufnahme des Hohlwellenmotors aufweist. Alternativ kann der Stator auch direkt durch geeignete Verbindungselemente an den Kniehebelmechanismus gekuppelt sein. Aufgrund der Erfindung kann das Reaktionsmoment des Antriebs und die Führung des Kreuzkopfes durch eine einzige kostengünstige Konstruktion realisiert werden.

Ein Beispiel der Erfindung ist in der beigefügten Figur 1 dargelegt. Auf einem Maschinenbett 16 ist eine feststehende Werkzeugaufspannplatte 11 angeordnet, zu der sich durch einen Kniehebelmechanismus 13 antreibbar eine bewegliche Werkzeugaufspannplatte 12 axial bewegen lässt. Die feststehende Werkzeugaufspannplatte 11 ist über das Maschinenbett 16 mit einer Endplatte 19 verbunden. Eine Spindel 21 ist mit ihrem der beweglichen Werkzeugaufspannplatte abgewandten Ende durch die Endplatte 19 geführt und in einer Ankerplatte 3 drehfest angeordnet. Auf dem anderen Ende der Spindel 21 ist ein Hohlwellenmotor 7 an den Kniehebelmechanismus 13 angeflanscht. Eine Spindelmutter 5 ist mit der Hohlwelle bzw. dem Rotor 6 des Hohlwellenmotors gekuppelt und steht in Eingriff mit der Spindel 21. Im hier dargestellten Beispiel ist der Stator 4 des Hohlwellenmotors direkt an den Kniehebelmechanismus 13 angeflanscht. Der Hohlwellenmotor 7 kann auch als Ganzes von dem Kreuzkopf des Kniehebelmechansimus aufgenommen werden, wenn dieser eine an den Hohlwellenmotor angepasste Ausnehmung aufweist. Auf diese Weise sind die Funktionen des Kreuzkopfes und die des Antriebsmotors zusammengefasst.

Bedarfsweise, insbesondere bei schweren Hohlwellenmotoren, ist es vorteilhaft, wenn seitlich und/oder unterhalb des Hohlwellenmotors Tragarme 23 vorgesehen sind, auf denen der Hohlwellenmotor 7 verschieblich abgestützt ist. Auf diese Weise sind die Spindel 21 und die Gelenke des Kniehebelmechanismus entlastet. Die Tragarme 23 können in der Endplatte 19 befestigt sein oder die Endplatte durchsetzen und in der dahinter befindlichen Ankerplatte 3 befestigt sein. In der Figur 1 ist nur der hintere von zwei seitlichen Tragarmen 23 teilweise ersichtlich.

### Positionsliste

### Spritzgießmaschine

- 3: Ankerplatte
- 11: Feststehende Werkzeugaufspannplatte
- 12: Bewegliche Werkzeugaufspannplatte
- 13: Kniehebelmechanismus
- 16: Maschinenbett
- 19: Endplatte

### Antrieb

- 4: Stator des Hohlwellenmotors
- 5: Spindelmutter
- 6: Rotor des Hohlwellenmotors
- 7: Hohlwellenmotor
- 21: Spindel
- 23: hinterer Tragarm
- 24: Kugeln

## Patentansprüche

1. Schließeinrichtung für eine Spritzgießmaschine für Kunststoffe mit einer feststehenden Werkzeugaufspannplatte, die über einen Kniehebelmechanismus mit einer beweglichen Werkzeugaufspannplatte verbunden ist, wobei zur Betätigung des Kniehebelmechanismus ein mit einer Spindel zusammenwirkender Hohlwellenmotor vorgesehen ist, und wobei der Hohlwellenmotor mit dem Kniehebelmechanismus verbunden ist,
**dadurch gekennzeichnet,**
**dass** die Spindel (21) drehfest angeordnet ist, dass das der beweglichen Werkzeugaufspannplatte (12) zugewandte Ende der Spindel (21) mit dem Rotor (6) des Hohlwellenmotors (7) in Eingriff ist, und dass der Stator (4) des Hohlwellenmotors mit dem Kniehebelmechanismus (13) verbunden ist.

2. Schließeinrichtung nach Anspruch 1, **dadurch gekennzeichnet, dass** der Rotor (6) ein Innengewinde aufweist, das mit dem Gewinde der Spindel (21) in Eingriff steht, vorzugsweise über Kugeln (24).

3. Schließeinrichtung nach Anspruch 1, **dadurch gekennzeichnet, dass** in dem Rotor (6) eine Spindelmutter (5) befestigt ist, die mit der Spindel (21) in Eingriff steht, vorzugsweise über Kugeln (24).

4. Schließeinrichtung nach einem der Ansprüche 1 bis 3, **dadurch gekennzeichnet, dass** der Kniehebelmechanismus an einen Kreuzkopf gekuppelt ist und dass der Hohlwellenmotor an den Kreuzkopf angeflanscht ist.

5. Schließeinrichtung nach einem der Ansprüche 1 bis 3, **dadurch gekennzeichnet, dass** der Kniehebelmechanismus an einen Kreuzkopf gekuppelt ist und dass der Kreuzkopf eine Ausnehmung zur Aufnahme des Hohlwellenmotors aufweist.

6. Schließeinrichtung nach einem der Ansprüche 1 bis 3, **dadurch gekennzeichnet, dass** der Kniehebelmechanismus direkt an den Stator des Hohlwellenmotors gekuppelt ist.

7. Schließeinrichtung nach Anspruch 6, **dadurch gekennzeichnet, dass** der Stator des Hohlwellenmotors auf seitlich und/oder unterhalb des Hohlwellenmotors (7) angeordneten Tragarmen (23) verschieblich abgestützt ist.

8. Schließeinrichtung nach einem der Ansprüche 1 bis 7, **dadurch gekennzeichnet, dass** die bewegliche Werkzeugaufspannplatte (12) auf mehreren Holmen verschieblich geführt ist und dass einer oder mehrere dieser Holme gleichzeitig als Tragarm (23) für den Hohlwellenmotor selbst oder den Stator (4) des Hohlwellenmotors dienen.

9. Schließeinrichtung nach einem der Ansprüche 1 bis 8, **dadurch gekennzeichnet, dass** die Spindel (21) durch eine Endplatte (19) geführt und in einer Ankerplatte (3) drehfest befestigt ist.

## Claims

1. A closing device for an injection moulding machine for plastics, comprising a fixed tool clamping plate which is connected to a moveable tool clamping plate by means of an articulated lever mechanism, wherein a hollow shaft motor co-operating with a spindle is provided to actuate the articulated lever mechanism, and wherein the hollow shaft motor is connected to the articulated lever mechanism, **characterised in**
**that** the spindle (21) is arranged in a rotationally fixed manner, the end of the spindle (21) facing the moveable tool clamping plate (12) is engaged with the rotor (6) of the hollow shaft motor (7) and the stator (4) of the hollow shaft motor is connected to the articulated lever mechanism (13).

2. The closing device according to claim 1, **characterised in that** the rotor (6) has an inner thread which engages with the thread of the spindle (21), preferably via balls (24).

3. The closing device according to claim 1, **characterised in that** a spindle nut (5) is fixed in the rotor (6), said nut being engaged with the spindle (21), preferably via balls (24).

4. The closing device according to any one of claims 1 to 3, **characterised in that** the articulated lever mechanism is coupled to a crosshead and that the hollow shaft motor is flange-mounted to the crosshead.

5. The closing device according to any one of claims 1 to 3, **characterised in that** the articulated lever mechanism is coupled to a crosshead and that the crosshead has a recess for receiving the hollow shaft motor.

6. The closing device according to any one of claims 1 to 3, **characterised in that** the articulated lever mechanism is coupled directly to the stator of the hollow shaft motor.

7. The closing device according to claim 6, **characterised in that** the stator of the hollow shaft motor is displaceably supported in bearing arms (23) disposed laterally to and/or below the hollow shaft motor (7).

8. The closing device according to any one of claims 1 to 7, **characterised in that** the movable tool clamping plate (12) is guided displaceably on a plurality of spars and that one or more of these spars simultaneously serves as a bearing arm (23) for the hollow shaft motor itself or the stator (4) of the hollow shaft motor.

9. The closing device according to any one of claims 1 to 8, **characterised in that** the spindle (21) is guided through an end plate (19) and is fixed in a rotationally fixed manner in an anchor plate (3).

## Revendications

1. Dispositif de fermeture pour presse à injection de matières synthétiques, comportant une plaque de montage d'outil fixe qui est rattachée par un mécanisme à genouillère à une plaque de montage d'outil mobile (12), dans lequel il est prévu, pour actionner le mécanisme de genouillère, un moteur à arbre creux coopérant avec une broche et dans lequel le moteur à arbre creux est rattaché au mécanisme de genouillère,
**caractérisé en ce que**
la broche (2) est disposée de manière fixe en rotation, que l'extrémité tournée vers la plaque de montage mobile de la broche (21) s'engrène dans le rotor (6) du moteur à arbre creux (7) et que le stator (4) du moteur à arbre creux est rattaché au mécanisme de genouillère.

2. Dispositif de fermeture selon la revendication 1, **caractérisé en ce que** le rotor (6) présente un filetage intérieur qui s'engrène dans le filetage de la broche (21), de préférence par des billes (24).

3. Dispositif de fermeture selon la revendication 1, **caractérisé en ce que**, dans le rotor (6), est fixé un écrou de broche (5) qui s'engrène dans la broche (21), de préférence par des billes (24).

4. Dispositif de fermeture selon une des revendications 1 à 3, **caractérisé en ce que** le mécanisme de genouillère est couplé à une tête en croix et que le moteur à arbre creux est rattaché par une bride à la tête en croix.

5. Dispositif de fermeture selon une des revendications 1 à 3, **caractérisé en ce que** le mécanisme de genouillère est couplé à une tête en croix et que la tête en croix présente un évidement pour recevoir le moteur à arbre creux.

6. Dispositif de fermeture selon une des revendications 1 à 3, **caractérisé en ce que** le mécanisme de genouillère est couplé directement au stator du moteur à arbre creux.

7. Dispositif de fermeture selon la revendication 6, **caractérisé en ce que** le stator du moteur à arbre creux s'appuie de manière déplaçable sur des bras support (23) disposés à côté et/ou en dessous du moteur à arbre creux (7).

8. Dispositif de fermeture selon une des revendications 1 à 7, **caractérisé en ce que** la plaque de montage d'outil mobile (12) est guidée de manière déplaçable sur plusieurs mancherons et qu'un ou plusieurs de ces manchons servent en même temps de bras support (23) pour le moteur à arbre creux lui-même ou le stator (4) du moteur à arbre creux.

9. Dispositif de fermeture selon une des revendications 1 à 8, **caractérisé en ce que** la broche (21) est guidée par une plaque terminale (19) et fixée de manière fixe en rotation dans une plaque d'ancrage (3).
